# EUROPEAN PATENT SPECIFICATION

(11) **EP 3 876 657 B1**
(45) Date of publication and mention of the grant of the patent: **06.12.2023**
(21) Application number: 21159998.0
(22) Date of filing: 22.08.2017
(51) Int. Cl.: H04W 74/08, H04W 84/12

(54) **COMMUNICATION APPARATUS AND COMMUNICATION METHOD**
KOMMUNIKATIONSVORRICHTUNG UND KOMMUNIKATIONSVERFAHREN
APPAREIL ET PROCÉDÉ DE COMMUNICATION

(30) Priority: 02.11.2016 JP 2016215482
(43) Date of publication of application: 08.09.2021
(62) Divisional of application: 17867284.6
(73) Proprietor: Sony Group Corporation, Tokyo 108-0075 (JP)
(72) Inventor: Aio, Kosuke, Tokyo, 108-0075 (JP); MA, Yuelin, Tokyo, 108-0075 (JP); Morioka, Yuichi, Tokyo, 1080075 (JP)
(74) Representative: Witte, Weller & Partner Patentanwälte mbB

(56) References cited:
- US-A1- 2009 274 167
- US-A1- 2012 163 218
- US-A1- 2016 066 257
- BO LI (NORTHWESTERN POLYTECHNICAL UNIVERSITY): "Fractional-Backoff Procedure and Dynamic CCA", IEEE DRAFT; 11-16-0589-00-00AX-FRACTIONAL-BACKOFF-PROC EDURE-AND-DYNAMIC-CCA, IEEE-SA MENTOR, PISCATAWAY, NJ USA , vol. 802.11ax 12 May 2016 (2016-05-12), pages 1-9, XP068119399, Retrieved from the Internet: URL:https://mentor.ieee.org/802.11/dcn/16/ 11-16-0589-00-00ax-fractional-backoff-proc edure-and-dynamic-cca.pptx [retrieved on 2016-05-12]
- GRAHAM SMITH (SR TECHNOLOGIES): "Unified SR approach DSC, ATPC and Inter-BSS ; 11-16-1064-03-00ax-unified-sr-approach-dsc -atpc-and-inter-bss", IEEE DRAFT; 11-16-1064-03-00AX-UNIFIED-SR-APPROACH-DSC -ATPC-AND-INTER-BSS, IEEE-SA MENTOR, PISCATAWAY, NJ USA , vol. 802.11ax, no. 3 30 September 2016 (2016-09-30), pages 1-14, XP068110636, Retrieved from the Internet: URL:https://mentor.ieee.org/802.11/dcn/16/ 11-16-1064-03-00ax-unified-sr-approach-dsc -atpc-and-inter-bss.pptx [retrieved on 2016-09-30]

## Description

### TECHNICAL FIELD

The technology disclosed in the present specification relates to a communication apparatus and a communication method for transmitting packets while an interference signal (such as signal arriving from an adjacent cell) is detected.

### BACKGROUND ART

IEEE802.11 as one representative standard of wireless LAN assumes carrier sense multiple access/collision avoidance (CSMA/CA) as a mechanism in which each terminal autonomously acquires a transmission opportunity. Specifically, a terminal waits for transmission for a random time (backoff), observes a surrounding radio environment during the backoff (carrier sensing), and stops the backoff and prevents packet transmission when detecting a radio wave having power with a certain detection threshold or more. With the mechanism of backoff and carrier sensing, the terminal avoids packet collision while autonomously and dispersively acquiring transmission opportunities.

In an environment in which many terminals are densely present, however, if a detection threshold set in the IEEE802.11 standard is used to perform the radio wave detection and the collision avoidance, a signal transmitted from a terminal belonging to an adjacent cell is detected, for example, and extra transmission restriction is problematic. Additionally, a cell herein corresponds to basic service set (BSS) configured of a base station and its own terminals, for example. Further, an adjacent cell corresponds to other BSS (denoted as "OBSS" below) a receivable range of which overlaps.

Thus, there is being discussed a spatial reuse (SR) technology in which adjacent cells reuse one frequency channel to efficiently use a frequency resource in the currently-standardized IEEE802.11ax. Specifically, even if the terminals in adjacent cells detect each other's signal, the terminals can transmit their own packets. A simplified BSS identifier called "BSS Color" is described in the PHY header of a packet and the reception side can discriminate a signal of its BSS (self-cell) from a signal from OBSS (adjacent cell) (denoted as "adjacent cell signal" below) on the basis of BSS Color described in the PHY header so that the SR technology is realized.

For example, in a case where a terminal which receives a packet can determine that the signal is an adjacent cell signal on the basis of the contents described in the PHY header, it stops receiving the packet at that time, and further permits backoff to be started when the reception power of the signal is a detection threshold (OBSS-PD threshold) of the adjacent cell signal or less, thereby realizing spatial reuse. Additionally, in the system, the terminal can increase the OBSS-PD threshold by lowering its transmission power, and can easily acquire a transmission opportunity by spatial reuse by adjusting the transmission power depending on interference power.

Further, other system for spatial reuse assumes that a terminal acquires information called SR parameters included in the packets of an adjacent cell signal, and sets transmission power to prevent influences on the terminals belonging to the adjacent cells.

In the present specification, the fact that a terminal performs backoff after detecting an adjacent cell signal and transmits packets by use of information available from the adjacent cell signal (reception power of the adjacent cell signal or SR parameters described in the packets) is called "SR transmission".

Patent Document 2 discloses a spatial reuse prioritized channel access scheme.

Patent Document 3 discloses a communication terminal apparatus capable of suppressing communication delay independently of the packet size.

### CITATION LIST

### PATENT DOCUMENT

Patent Document 1: Japanese Patent Application Laid-Open No. 2013-179555
Patent Document 2: US 2016/0066257 A
Patent Document 3: US 2009/0274167 A

### SUMMARY OF THE INVENTION

### PROBLEMS TO BE SOLVED BY THE INVENTION

It is an object of the technology disclosed in the present specification to provide an excellent communication apparatus and communication method capable of suitably transmitting packets while a signal from an adjacent cell is being detected.

### SOLUTIONS TO PROBLEMS

The technology disclosed in the present specification has been made in consideration of the above problems. A communication apparatus which operates as an access point, wherein the communication apparatus is configured to perform spatial reuse, SR, transmission is defined in claim 1. A respective method is defined in claim 6.

### EFFECTS OF THE INVENTION

According to the technology disclosed in the present specification, it is possible to provide an excellent communication apparatus and communication method capable of appropriately adjusting a transmission standby time and transmitting packets even while a signal from an adjacent cell is being detected.

Additionally, the effects described in the present specification are merely exemplary and the effects of the present invention are not limited thereto. Further, the present invention may further obtain additional effects other than the above effects.

Other objects, characteristics, and advantages of the technology disclosed in the present specification will be apparent in the detailed description based on embodiments and accompanying drawings described below.

### BRIEF DESCRIPTION OF DRAWINGS

Fig. 1 is a diagram illustrating an exemplary configuration (first embodiment, not encompassed by the wording of the claims) of a wireless LAN system.
Fig. 2 is a diagram schematically illustrating a functional configuration of a communication apparatus 200 capable of operating as AP and STA.
Fig. 3 is a diagram illustrating an exemplary communication sequence (during conventional backoff) in the wireless LAN system illustrated in Fig. 1.
Fig. 4 is a diagram illustrating an exemplary communication sequence (SR backoff is newly provided) in the wireless LAN system illustrated in Fig. 1.
Fig. 5 is a flowchart (first embodiment, not encompassed by the wording of the claims) illustrating a processing procedure in which the communication apparatus sets SR backoff.
Fig. 6 is a diagram illustrating an exemplary configuration of a SR mode selection table.
Fig. 7 is a diagram illustrating an exemplary configuration of a parameter setting table per SR mode.
Fig. 8 is a flowchart illustrating a processing procedure (first embodiment, not encompassed by the wording of the claims) performed by the communication apparatus after the end of packet transmission.
Fig. 9 is a diagram illustrating an exemplary configuration (second embodiment, not encompassed by the wording of the claims) of the wireless LAN system.
Fig. 10 is a diagram illustrating an exemplary communication sequence in the wireless LAN system illustrated in Fig. 9.
Fig. 11 is a diagram illustrating an exemplary communication sequence (second embodiment, not encompassed by the wording of the claims) in the wireless LAN system illustrated in Fig. 9.
Fig. 12 is a flowchart illustrating a processing procedure (second embodiment, not encompassed by the wording of the claims) performed by the communication apparatus after the end of packet transmission.
Fig. 13 is a diagram illustrating an exemplary configuration of frames used to provide notification of parameters used for adjusting a SR backoff time.

### MODE FOR CARRYING OUT THE INVENTION

Embodiments of the technology disclosed in the present specification will be described below in detail with reference to the drawings.

Only the third embodiment described below is encompassed by the wording of the claims. The first and second embodiments are described because they are considered as useful for understanding the invention.

SR transmission is enabled thereby to alleviate extra transmission restrictions so that each terminal can increase transmission opportunities. To the contrary, however, there arises a problem in which the amount of interferences of the entire system increases due to SR transmission.

For example, if a terminal performs SR transmission, an interference wave is mixed into a terminal receiving a packet of an adjacent cell signal, which causes a deterioration in communication quality in the adjacent cell. On the other hand, in a case where transmission power is restricted as described above, for example, in order to alleviate influences (the amount of interferences) on the surrounding, thereby acquiring a transmission opportunity, reception power of a terminal receiving its packets lowers this time, and a deterioration in communication quality is caused also in the self-cell.

If the communication quality is deteriorated in the entire system in this way, even if the transmission opportunities of the terminal increase, a throughput improvement effect in the entire system can be lowered.

Thus, the present applicants think that in a case where a plurality of terminals capable of performing SR transmission are present, it is desirable that a terminal, which is as far from an interference source as possible (or without any influence around the interference source) and close to a receiver (or its packet transmission is not influenced by an interference), acquires a transmission opportunity.

At present, however, there is not defined a specific method for determining which terminal acquires a transmission opportunity in a case where a plurality of terminals capable of performing SR transmission are present. If all the terminals perform backoff as usual, some terminals subjected to strong interference power are likely to acquire a transmission opportunity, situations such as mixing of an interference wave into an adjacent cell signal or reduction in reception power in a reception terminal due to restriction in transmission power of a self-cell signal easily occur, and communication quality is deteriorated in both the adjacent cell and the self-cell, which can be the causes of a reduction in throughput in the entire system.

For example, there is proposed a wireless access control method in which when a packet collision occurs between terminals, a base station calculates each signal to interference and noise ration (SINR) by use of the capture function and notifies the terminals of the SINR, and a terminal notified of a high SINR value performs fixed backoff thereby to easily acquire a transmission opportunity (see Patent Document 1, for example). It has the same object to positively give a transmission opportunity to a terminal in a preferable link state. However, while the base station needs to provide notification of a SINR measurement result in the wireless access control method, it is assumed that SR transmission is performed within an interference signal transmission time in the SR technology, and thus it is feared that packet exchange for such notification does not lead to an improvement in throughput in SR transmission.

Thus, the present specification proposes the following technologies (1) to (4) in order to improve throughput in the entire system by SR transmission while restricting a deterioration in communication quality in a self-cell and its adjacent cells.

(1) A terminal newly performs random backoff (SR backoff) before performing SR transmission by use of information available from an adjacent cell signal, thereby acquiring a transmission opportunity while avoiding packet collision.
(2) A terminal, which is to perform SR transmission according to (1), can adjust a SR backoff time by an intensity of its received interference power and information regarding a distance (propagation loss) to a transmission destination and the like. Specifically, a shorter standby time is set for a terminal subjected to weaker interference power thereby to easily acquire a transmission opportunity.
(3) A penalty is given to a terminal which has successfully performed packet transmission in SR transmission, thereby preventing a specific terminals from occupying transmission opportunities in SR transmission. Specifically a terminal, which has successfully performed packet transmission in SR transmission, provides an additional backoff time and sets a longer transmission standby time when setting new backoff.
(4) In a case where at least one technology in (2) and (3) is employed, the information which a terminal uses to adjust a SR backoff time can be provided in notification from the base station. Specifically, the base station transmits, to the terminal, an instruction signal to change the parameters for determining a backoff time during SR transmission or the parameters for determining an additional backoff time after success of SR transmission on the basis of the number of its own terminals, throughput situation of each terminal, or the like.

Technology (4) above is employed in all embodiments encompassed by the wording of the claims.

In the present specification, backoff set for SR transmission while a base station or terminal is observing an adjacent cell signal will be denoted as "SR backoff" and a time for SR backoff will be denoted as "SR backoff time". Additionally, backoff performed as conventionally done during not SR transmission but normal packet transmission (that is, when packets are transmitted not on the basis of information regarding an adjacent cell signal while an adjacent cell signal is not observed) will be denoted as "conventional backoff" below, and is discriminated from SR backoff.

Generally, the number of slots randomly determined is multiplied by one slot time of about several microseconds to find a backoff time as transmission standby time. The number of slots is a value randomly determined between 0 and a contention window (CW) value. The CW value increases up to CWmax (maximum value of CW) each time packet transmission fails assuming an initial value (value on reset) of CWmin (minimum value of CW), and is reset to CWmin when packet transmission is successfully performed. Further, when a terminal starts packet transmission while other terminal is in the transmission standby time, the other terminal stops the transmission standby and restarts the transmission standby after the terminal terminates the packet transmission.

CWmin, CWMax, slot time, and the like described above correspond to the information used for adjusting a backoff time or the parameters for determining a backoff time. It should be understood that CWmin, CWmax, slot time, and the like set during SR transmission correspond to the information used for adjusting a SR backoff time or the parameters for determining a SR backoff time. Additionally, the information regarding the presence of additional backoff and an additional backoff time is assumed to be included in the parameters for determining a SR backoff time.

In the present specification, the description will be made below in detail assuming the technologies (1) and (2) as first embodiment, the technology (3) as second embodiment, and the technology (4) as third embodiment. Only the third embodiment is encompassed by the wording of the claims. The first and second embodiments are described because they are considered as useful for understanding the invention. According to the first embodiment, a terminal for performing SR transmission by use of information available from an adjacent cell signal adjusts a SR backoff time by an intensity of its received interference power and information regarding a distance (propagation loss) to a base station and the like, thereby acquiring a transmission opportunity while avoiding packet collision. Further, the second embodiment and the third embodiment assume that SR transmission is started after a terminal or a base station performs the SR backoff. According to the second embodiment, a terminal which has successfully performed SR transmission sets an additional backoff time thereby to achieve fair transmission opportunities among terminals. Further, according to the third embodiment, a base station sets the parameters used for adjusting a SR backoff time for each terminal on the basis of the number of its own terminals, throughput situation of each terminal, and the like.

Additionally, each embodiment described below assumes that SR transmission is performed when reception power of an adjacent cell signal is the OBSS-PD threshold or less, but the technology disclosed in the present specification is not limited thereto. The technology disclosed in the present specification includes SR transmission based on the (above-descried) SR parameters described in packets of an adjacent cell signal or packet transmission using information regarding an interference signal (not limited to adjacent cell signal), for example. First embodiment, not encompassed by the wording of the claims, but considered as useful for understanding the invention

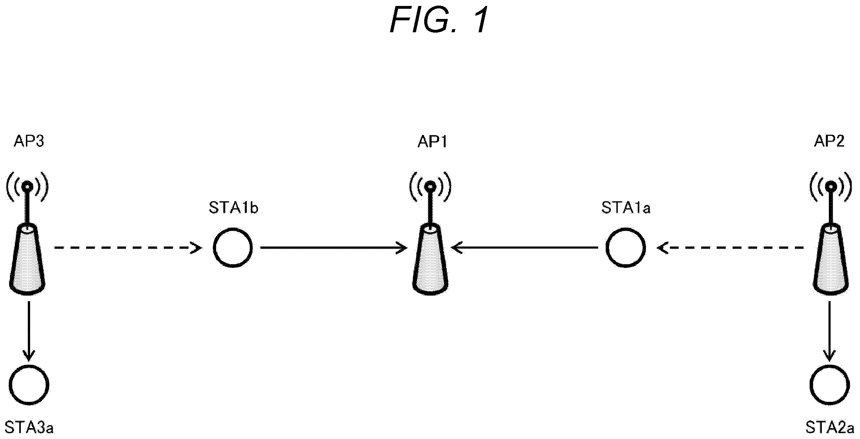

Fig. 1 illustrates an exemplary configuration of a wireless LAN system according to the technology disclosed in the present specification. The illustrated system is configured of a plurality of base stations (AccessPoint: AP) and a plurality of terminals (STAtion: STA) among which connection is established, and interference sources such as adjacent cells and other systems are present therearound.

AP1 configures a self-cell (BSS) together with its own STAla and STA1b. Similarly, AP2 configures a self-cell together with its own STA2a, and AP3 configures a self-cell together with its own STA3a.

For an arrangement of the cells and the terminals in Fig. 1, both the cells of AP2 and AP3 are adjacent cells to the cell of AP1, and their receivable ranges overlap. However, the cell of AP2 is assumed not to be adjacent to the cell of AP3.

In the Figure, the arrows indicate packet transmission directions. The orientations of the solid-line arrows indicate transmission destinations designated by packets. Further, the orientations of the dotted-line arrows indicate not packet transmission destinations but arrivals of packets. It is therefore illustrated that an adjacent cell signal arrives from AP2 at STAla in AP1, and an adjacent cell signal arrives from AP3 at STAlb in AP1.

Further, though not illustrated in arrows in Fig. 1, a transmission signal from STAla to AP1 reaches also neighboring AP2 and STA2a. Similarly, a transmission signal from STAlb to AP1 reaches also neighboring AP3 and STA3a.

However, a configuration of the wireless LAN system according to the technology of the first embodiment is not limited to Fig. 1, a plurality of communication apparatuses among which connection is established have only to be present, communication apparatuses as surrounding terminals have only to be present for the communication apparatuses, respectively, and a positional relationship between AP and STA does not matter if the conditions are met.

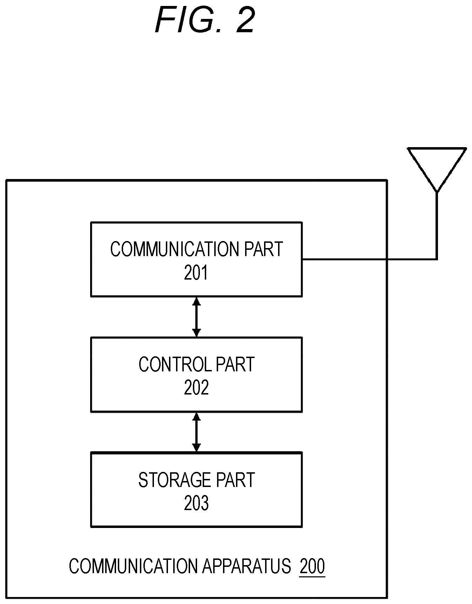

Fig. 2 schematically illustrates a functional configuration of a communication apparatus 200 capable of operating as AP and STA in the wireless LAN system illustrated in Fig. 1. The illustrated communication apparatus 200 includes a communication part 201, a control part 202, and a storage part 203.

The communication part 201 exchanges packets. It should be understood that the total signal processings in a datalink layer and a physical layer for data exchange are performed in the communication part 201. For example, the communication part 201 measures reception power of an interference signal such as adjacent cell signal.

The control part 202 sets various parameters used in the communication part 201. Further, in a case where the communication apparatus 200 operates as STA according to the present embodiment, the control part 202 performs control to perform normal packet transmission and the conventional backoff, and further performs control to determine the presence of SR transmission or to perform the SR backoff.

The storage part 203 saves measurement results or various parameters used in the communication part 201. In a case where the communication apparatus 200 operates as STA according to the present embodiment, the parameters used for SR transmission and SR backoff setting are temporarily stored in the storage part 203.

Additionally, it should be understood that the communication apparatus 200 illustrated in Fig. 2 can operate as AP and STA also according to the second embodiment and the third embodiment described below.

There will be subsequently described a method in which a terminal performs the SR backoff before SR transmission and adjusts a SR backoff time by use of an intensity of its received interference power and information regarding a distance (propagation loss) to a transmission destination and the like. Additionally, the first embodiment assumes the configuration of the wireless LAN system illustrated in Fig. 1.

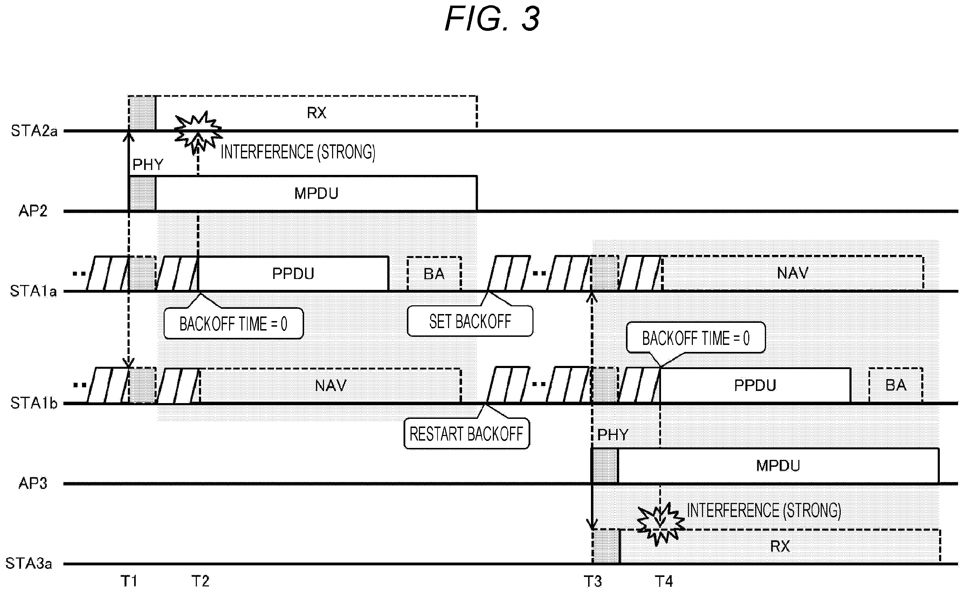

Fig. 3 illustrates an exemplary communication sequence in the wireless LAN system illustrated in Fig. 1. However, each horizontal axis in the Figure indicates a time axis, each square indicates a packet transmitted at a time corresponding to a position on a horizontal axis, and each parallelogram indicates a transmission standby time (backoff). Further, the orientations of the solid-line arrows vertically extending from packets indicate transmission destinations of the packets. Further, the orientations of the dotted-line arrows vertically extending from packets indicate not packet transmission destinations but arrivals of the packets. In the exemplary communication sequence illustrated in Fig. 3, it is assumed that each terminal performs backoff as conventionally done, or the conventional backoff.

In the Figure, it is assumed that both STAla and STAlb set the conventional backoff and are in the transmission standby state. Then at time T1, STAla and STAlb in the transmission standby receive a signal sent from AP2, and when identifying the signal as an adjacent cell signal on the basis of the information in the signal (such as BSS identifier (BSS Color) described in PHY header (PHY)), further confirm that the reception power is at the OBSS-PD threshold or less, stop receiving the adjacent cell signal, and each continue the conventional backoff for SR transmission.

Additionally, STA which observes the reception power exceeding the OBSS-PD threshold cannot perform SR transmission. STA in this case stops the conventional backoff, finishes transmitting the adjacent cell signal, and then restarts the conventional backoff, but such STA is not illustrated in Fig. 3.

When the conventional backoff is performed in a case where both STAla and STAlb can perform SR transmission, not STAlb far away from AP2 or STA2a but STA1a closer to AP2 or STA2a acquires a transmission opportunity depending on a remaining backoff time. At time T2, STAla which has earlier terminated the conventional backoff starts SR transmission to AP1. Accordingly, STAlb sets network allocation vector (NAV) to be in a transmission prohibited state until a block ack (BA) packet is returned from AP1 to STA1a.

However, when STAla SR-transmits packets to AP1 to overlap on the transmission period from AP2 to STA2a, stronger interference power is applied on STA2a which is receiving packets from AP2, and the reception quality of STA2a in the adjacent cell is largely deteriorated.

Further, in a case where each of STAla and STAlb performs an access procedure of adjusting transmission power depending on interference power, STA1a, which is given strong interference power from AP2, has to perform SR transmission at lower transmission power, and thus the reception quality of AP1 is largely deteriorated.

It is therefore desirable that in a case where STAla and STAlb observe an adjacent cell signal from AP2, STA1b, which is positioned far away from AP2 as interference source or receives weak interference power, acquires a transmission opportunity.

Thereafter, STAla terminates packet transmission to AP1 and receives the BA packet from AP1, and in a case where a transmission packet is still present, STAla sets (resets) the conventional backoff again. Further, when NAV ends, STA1b restarts the conventional backoff. Subsequently at time T3, STAla and STAlb in the transmission standby receive a signal sent from AP3, and when identifying the signal as an adjacent cells signal on the basis of the information in the signal (such as BSS Color described in PHY header), further confirm that the reception power is at the OBSS-PD threshold or less, stop receiving the adjacent cell signal, and each continue the conventional backoff for SR transmission.

Also in this case, when STAla and STAlb perform the conventional backoff, not STAla far away from AP3 or STA3a but STAlb closer to AP3 or STA3a acquires a transmission opportunity depending on a remaining backoff time. Particularly in the illustrated example, while STAlb restarts the conventional backoff, STAla resets the conventional backoff in response to SR transmission performed just before, and it is expected that STAlb has a shorter remaining backoff time and STAlb earlier terminates the backoff to acquire a transmission opportunity.

At time T4, STAlb which has earlier terminated the conventional backoff starts SR transmission to AP1, and STAla sets NAV to be in the transmission prohibited state until a BA packet is returned from AP1 to STA1b.

However, when STAlb SR-transmits packets to AP1 to overlap on the transmission period from AP3 to STA3a, strong interference power is applied on STA3a which is receiving packets from AP3, and the reception quality of STA3a in the adjacent cell is largely deteriorated. Further, in a case where each of STAla and STAlb performs the access procedure of adjusting transmission power depending on interference power, STAlb which receives strong interference power from AP3 has to lower transmission power, and thus the reception quality of AP1 is largely deteriorated.

It is therefore desirable that in a case where STAla and STAlb observe an adjacent cell signal from AP3, STAla which is positioned far away from AP3 as interference source or receives weak interference power acquires a transmission opportunity.

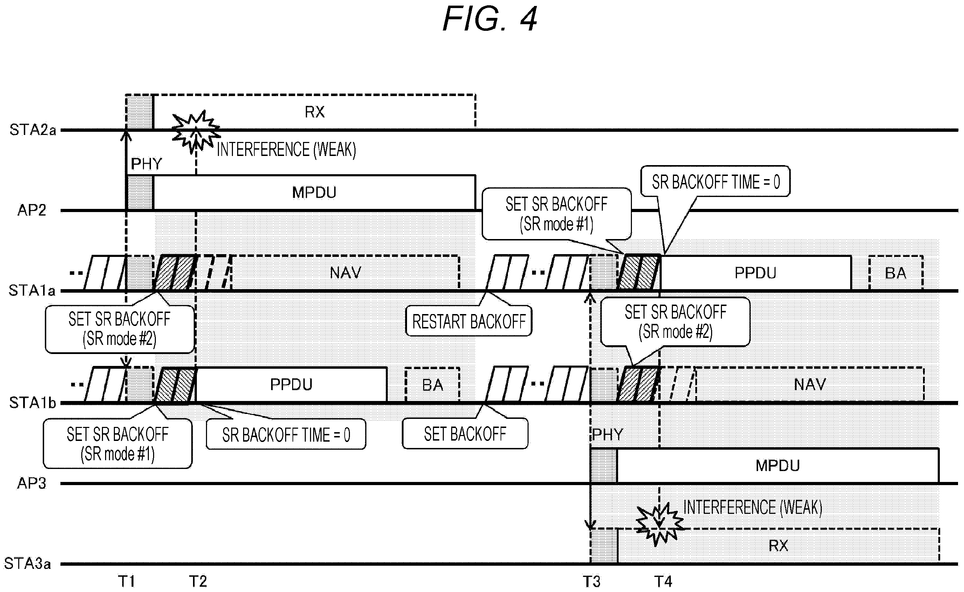

Fig. 4 illustrates other exemplary communication sequence in the wireless LAN system illustrated in Fig. 1. However, each horizontal axis in the Figure indicates a time axis, each square indicates a packet transmitted at a time corresponding to a position on a horizontal axis, and each parallelogram indicates a transmission standby time (backoff) (as described above). Further, the orientations of the solid-line arrows vertically extending from packets indicate transmission destinations of the packets. Further, the orientations of the dotted-line arrows vertically extending from packets indicate not packet transmission destination but arrivals of the packets (as described above).

The exemplary communication sequence illustrated in Fig. 4 assumes that the technology according to the first embodiment is applied, each STA newly sets the SR backoff in the packet transmission standby while observing an adjacent cell signal, and adjusts a backoff time during SR transmission on the basis of an intensity of its observed interference power and information regarding a distance (propagation loss) to AP and the like. In Fig. 4, the parallelograms corresponding to the SR backoff are shaded.

In the Figure, it is assumed that both STAla and STAlb set the conventional backoff and are in the transmission standby state. Then at time T1, STA1a and STAlb in the transmission standby receive a signal sent from AP2, and when identifying the signal as an adjacent cell signal on the basis of the information in the signal (such as BSS Color described in PHY header), further confirm that the reception power is at the OBSS-PD threshold or less, stop receiving the adjacent cell signal, and each start backoff for SR transmission.

Additionally, STA which observes the reception power exceeding the OBSS-PD threshold cannot perform SR transmission. STA in this case stops the conventional backoff and restarts the conventional backoff after the end of transmission of the adjacent cell signal, but such STA is not illustrated in Fig. 4.

In a case where both STAla and STAlb can perform SR transmission, the conventional backoff is stopped and the SR backoff is newly set thereby to wait for packet transmission. STAla and STAlb each adjust a SR backoff time depending on an intensity of their observed interference power, information regarding a distance (propagation loss) to AP as packet transmission destination, and the like. In the exemplary system configuration assumed in Fig. 1 and Fig. 4, the interference power received by STAlb from AP2 is weaker than the interference power received by STAla from AP2. Thus, a shorter SR backoff time (denoted as "SR mode #1") is set for STA1b, a longer SR backoff time (denoted as "SR mode #2") is set for STA1a, and STAlb more easily acquires a transmission opportunity for SR transmission than STA1a.

Consequently, at time T2, STAlb which has earlier terminated the SR backoff acquires a transmission opportunity, and starts SR transmission to AP1. Further, STAla sets NAV to be in the transmission prohibited state until a BA packet is returned from AP1 to STA1b.

In this way, since STA1b, which is positioned far away from AP2 as interference source or receives weak interference power, acquires a transmission opportunity, even if STAlb transmits packets to overlap on the transmission period from AP2 to STA2a, a deterioration in reception quality of STA2a in the adjacent cell can be alleviated.

Further, also in a case where each of STAla and STAlb performs the access procedure of adjusting transmission power depending on interference power, STAlb observes weak interference power from AP2, and thus does not need to largely lower its transmission power. Thus, STAlb can perform SR transmission without lowering the transmission power, and AP1 can keep preferable reception quality.

Thereafter, STAlb terminates packet transmission to AP1 and receives the BA packet from AP1, and in a case where a transmission packet is still present, STAlb sets (resets) the conventional backoff again. Further, when NAV ends, STAla restarts the conventional backoff. Subsequently at time T3, STAla and STAlb in the transmission standby receive a signal sent from AP3, and when identifying the signal as an adjacent cells signal on the basis of the information in the signal (such as BSS Color described in PHY header), further confirm that the reception power is at the OBSS-PD threshold or less, stop the reception, and each start backoff for SR transmission.

Also in this case, in a case where both STAla and STAlb can perform SR transmission, they stop the conventional backoff, each newly set the SR backoff, and wait for packet transmission. STAla and STAlb each adjust a SR backoff time depending on an intensity of their observed interference power, information regarding a distance (propagation loss) to AP as packet transmission destination, and the like. In this case, the inference power received by STAla from AP3 is weaker than the interference power received by STAlb from AP3, and thus STAla sets a shorter SR backoff time (SR mode #1) while STAlb sets a longer SR backoff time (SR mode #2), and now STAla more easily acquires a transmission opportunity for SR transmission than STA1b.

Consequently, at time T4, STA1a, which has earlier terminated the SR backoff, acquires a transmission opportunity and starts SR transmission to AP1. Further, STAlb sets NAV to be in the transmission prohibited state until a BA packet is returned from AP1 to STA1a.

Since STA1a, which is positioned far away from AP3 as interference source or receives weak interference power, acquires a transmission opportunity, even if STAla transmits packets to overlap on the transmission period from AP3 to STA3a, a deterioration in reception quality of STA3a in the adjacent cell can be alleviated.

Further, also in a case where each of STAla and STAlb performs the access procedure of adjusting transmission power depending on interference power, STAla observes weak interference power from AP3, and thus does not need to lower its transmission power. Thus, STAla can perform SR transmission without lowering the transmission power, and AP1 can keep preferable reception quality.

In other words, in the exemplary communication sequence illustrated in Fig. 4, each terminal adjusts the transmission standby time depending on its observed interference power thereby to perform SR transmission without a large influence on the reception quality of the entire system and without extra transmission restrictions. Specifically, a terminal which is to perform SR transmission stops the conventional backoff, and adds the SR backoff as random standby time for SR transmission. Further, a terminal can adjust a SR backoff time depending on its observed interference power or a distance (propagation loss) to AP as transmission destination.

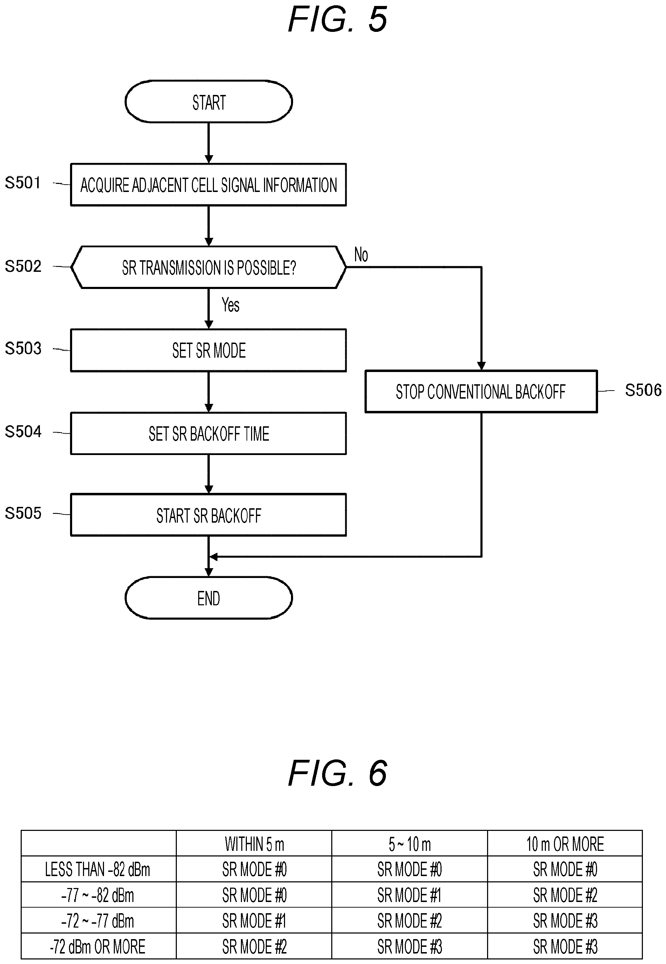

Fig. 5 illustrates a flowchart of a processing procedure of setting the SR backoff when AP or STA receives an adjacent cell signal according to the first embodiment. The control part 203 mainly performs the illustrated processing procedure when the communication apparatus 200 having the functional configuration illustrated in Fig. 2 operates as AP or STA in the wireless LAN system as illustrated in Fig. 1, for example.

The communication apparatus can discriminate a self-cell signal from an adjacent cell signal on the basis of BSS Color in a simplified form described in the PHY header of a packet of a reception signal, for example. Additionally, in a case where the self-cell signal is discriminated, the processing for the self-cell signal is performed, but the processing for the self-cell signal is not illustrated in Fig. 5, and a description thereof will be omitted below.

The communication apparatus first acquires information regarding a received adjacent cell signal (step S501), and determines whether SR transmission is possible (step S502).

For example, in step S501, the reception power of the adjacent cell signal is acquired as the information regarding the adjacent cell signal. Then in step S502, if the reception power is a predetermined detection threshold (OBSS-PD threshold) or less, it is determined that SR transmission is possible.

Alternatively, in step S501, information called SR parameter included in the packets of the adjacent cell signal is acquired. Then in step S502, if the transmission power can be set not to influence the terminals belonging to the adjacent cells, it is determined that SR transmission is possible.

Here, in a case where the communication apparatus determines that SR transmission is not possible (No in step S502), it stops the conventional backoff (step S506), and terminates the processing routine. In this case, when no adjacent cell signal is observed, the conventional backoff is restarted, and the packets start being transmitted after the transmission standby for the remaining backoff time.

On the other hand, in a case where the communication apparatus determines that SR transmission is possible (Yes in step S502), a SR mode is determined depending on interference power observed by the communication apparatus, or information regarding a distance (propagation loss or the like) to the destination to which packets are transmitted in SR transmission (step S503).

According to the present embodiment, a plurality of SR modes are defined depending on combinations between an influence of interference power from an adjacent cell during SR transmission and a communication distance to a SR transmission destination. The SR modes have a correspondence relationship with the influences on the communication quality of an adjacent cell as interference source and the communication quality of a self-cell during SR transmission. The parameters such as CWmin, CWmax, and slot time for setting a SR backoff time are associated per SR mode (as described below), or a SR backoff time is set depending on a SR mode. The parameters should be set such that a longer SR backoff time is set for a SR mode with larger influences on an adjacent cell or less preferable communication quality, and the SR modes will be described below in detail.

The communication apparatus then sets a SR backoff time by use of each parameter for determining the SR backoff time associated with the selected SR mode (step S504).

The communication apparatus then starts the SR backoff for SR transmission in the set SR backoff time (step S505), and terminates the processing routine. Thereafter, if a media (on a frequency channel to be used) signal is not detected in the SR backoff time, the communication apparatus acquires a transmission opportunity and performs packet transmission in SR transmission.

Fig. 6 illustrates an exemplary configuration of a SR mode selection table. A plurality of SR modes are defined depending on combinations between an influence of interference power during SR transmission and a communication distance to a SR transmission destination. The SR mode selection table illustrated in Fig. 6 indicates the SR modes depending on the combinations between interference power and communication distance by classifying the interference power per row and classifying the communication distance in the column direction. A SR mode can be an index indicating an influence of interference power during SR transmission and a distance to a SR transmission destination.

The communication apparatus 200 operating as STA or AP stores the SR mode selection table in the storage part 203, for example. Thus, the communication apparatus 200 can set an appropriate SR mode depending on the its observed interference power and a communication distance to AP with reference to the SR mode selection table in step S503 in the flowchart illustrated in Fig. 5.

However, the numerical values illustrated in Fig. 6 are exemplary, and are not limited. Further, it is assumed in Fig. 6 that STA holds the distance information for AP, but other index indicating how far STA and AP are away from each other may be replaced with the communication distance thereby to configure the SR mode selection table. For example, a SR mode may be selected by replacing the propagation loss, a reception signal of a beacon signal transmitted from AP to STA, or the like with the communication distance.

Additionally, the SR mode selection table illustrated in Fig. 6 by way of example indicates a list of SR modes defined depending on the combinations between interference power and communication distance to SR transmission destination, but a SR mode selection table listing SR modes defined only by interference power and a SR mode selection table listing SR modes defined only by a communication distance to SR transmission destination can be assumed as variants. Further, to the contrary, in a case where parameters influencing communication quality of an adjacent cell during SR transmission and communication quality of a self-cell are present other than interference power and communication distance, the SR modes may be defined in consideration of the parameters.

The mode numbers are allocated in ascending order depending on an intensity of interference power or a communication distance in the SR mode selection table illustrated in Fig. 6. The parameters should be set such that a longer SR backoff time is set for a SR mode with a larger influence on an adjacent cell or less preferable communication quality of a self-cell. Thus, a shorter SR backoff time should be set for a SR mode with a lower mode number, and a longer SR backoff time should be set for a SR mode with a higher mode number.

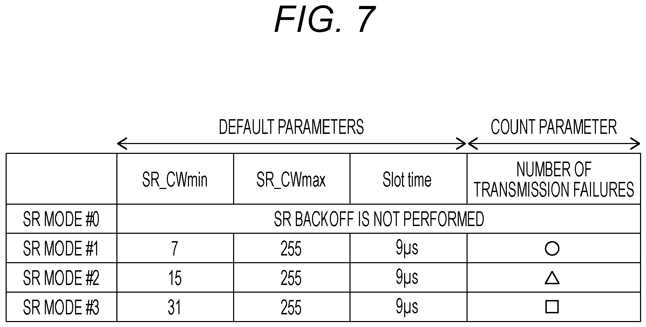

Fig. 7 illustrates an exemplary configuration of a parameter setting table per SR mode. The parameter setting table is a summary table indicating each parameter for setting a SR backoff time per SR mode. The parameters include default parameters including fixed values and a count parameter the value of which is counted and sequentially updated.

The communication apparatus 200 operating as STA stores a minimum value (denoted as "SR_CWmin" below) and a maximum value (denoted as "SR_CWmax" below) of the contention window (CW) during the SR backoff per SR mode as well as a slot time (Slot Time) as the default parameters in the parameter setting table per SR mode in the storage part 203.

The communication apparatus 200 reads the respective parameter values such as SR_CWmin, SR_CWmax, and slot time corresponding to the SR mode set in step S503 from the parameter setting table stored in the storage part 203 in step S504 in the flowchart illustrated in Fig, 5, and can set a SR backoff time (depending on a combination between its observed interference power and a communication distance to AP). Basically, the SR_CW value increases up to SR CWmax each time SR transmission fails assuming an initial value of SR_CWmin, and a random value determined between 0 and the SR_CW value is multiplied by the slot time thereby to find a SR backoff time.

As illustrated in Fig. 7, the value of SR_CWmin is set to be higher in the order of SR mode #1 → #2 → #3 thereby to set the SR backoff time of STA selecting SR mode #3 to be longer than the SR backoff time of STA selecting SR mode #1. That is, assuming that a longer SR backoff time should be set for STA subjected to stronger interference power, a shorter SR backoff time can be set in a SR mode with a lower mode number, and a longer SR backoff time can be set in a SR mode with a higher mode number.

Further, as illustrated in Fig. 7, the communication apparatus 200 further provides a region for storing the count parameter such as the number of packet transmission failures in each SR mode, and counts and manages the number of packet transmission failures per SR mode. However, SR mode #0 in Fig. 7 is a mode in which the SR backoff is not added and SR transmission is performed only by the conventional backoff. In other words, the communication apparatus 200 separately counts and manages the number of transmission failures when packets are transmitted (by the conventional backoff) while an adjacent cell signal is not observed, and the number of transmission failures (per SR mode) during SR transmission. In terms of the fact that the range to find a random value used for calculating a backoff time enlarges depending on the number of transmission failures, the count parameter is also included in the parameters for determining a SR backoff time.

Additionally, the values of the default parameters such as SR_CWmin, SR_CWmax, and Slot Time are not limited to the values defined in Fig. 7, and may be set at different values per SR mode. Further, if a parameter capable of adjusting a transmission standby time during the SR backoff is present other than the default parameters and the count parameter illustrated in Fig. 7, it may be set per SR mode.

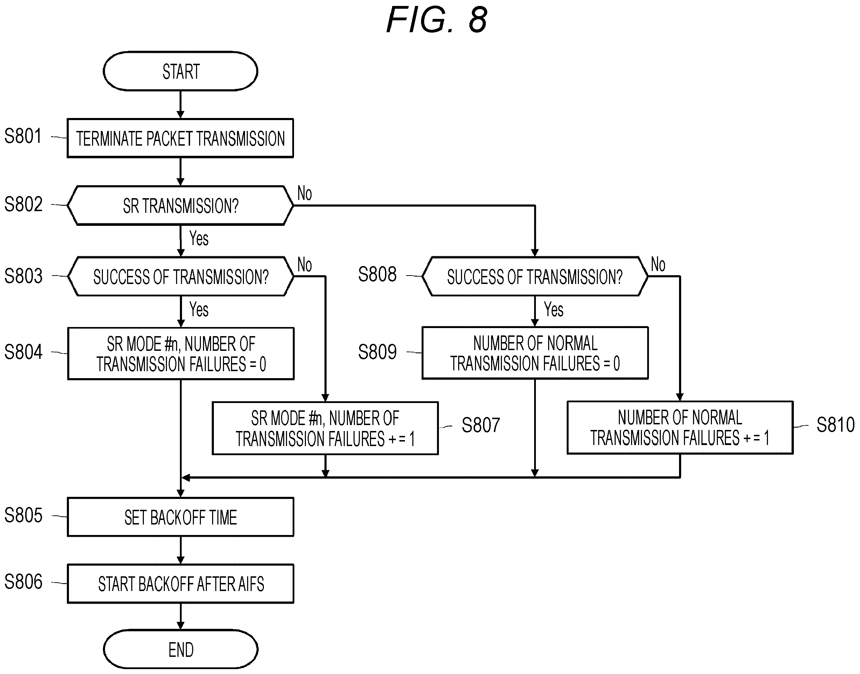

Fig. 8 illustrates a flowchart of a processing procedure performed by the communication apparatus after the end of packet transmission according to the first embodiment. For example, when the communication apparatus 200 having the functional configuration illustrated in Fig. 2 operates as STA in the wireless LAN system illustrated in Fig. 1, the control part 203 mainly performs the processing procedure.

When terminating packet transmission (step S801), STA checks whether or not it has performed SR transmission (step S802).

In a case where STA has performed not SR transmission but normal packet transmission (No in step S802), it further checks whether or not the packet transmission has been successfully performed (step S808). Whether or not the packet transmission has been successfully performed can be determined depending on whether or not a block ack (BA) packet is returned from AP as transmission destination to STA.

In a case where the normal packet transmission has been successfully performed (Yes in step S808), STA resets the number of transmission failures during the normal packet transmission at 0 (step S809). Further, in a case where the normal packet transmission has not been successfully performed (No in step S808), STA increments the number of transmission failures during the normal packet transmission by 1 (step S810).

On the other hand, in a case where STA has performed SR transmission (Yes in step S802), it manages the number of transmission failures per SR mode. Specifically, STA further checks whether or not the SR transmission has been successfully performed (step S803). Whether or not the SR transmission has been successfully performed can be determined depending on whether or not a block ack (BA) packet is returned from AP as transmission destination to STA.

In a case where STA has successfully performed the SR transmission (Yes in step S803), STA resets the number of transmission failures in the SR mode at that time at 0 (step S804). Further, in a case where STA has not successfully performed the SR transmission (No in step S803), STA increments the number of transmission failures in the SR mode at that time by 1 (step S807).

STA then sets a backoff time (step S805). In the case of the conventional backoff, the CW value is determined depending on the number of transmission failures, and a random value between 0 and the CW value is multiplied by the slot time (during the normal transmission) thereby to find a backoff time. The CW value increases up to CWmax depending on the number of transmission failures assuming an initial value of CWmin. Further, when the normal packet transmission has been successfully performed (Yes in step S808), the number of transmission failures is reset to 0 (step S809), and consequently the CW value is also reset to CWmin.

Further, in the case of the SR backoff, in step S805, the SR_CW value is determined depending on the number of transmission failures per SR mode, and a random value between 0 and the SR_CW value is multiplied by the slot time (during the SR transmission) thereby to find a SR backoff time. The SR_CW value increases up to SR_CWmax depending on the number of transmission failures assuming an initial value of SR_CWmin. Further, when the packet transmission has been successfully performed in SR transmission (Yes in step S803), the number of transmission failures counted per SR mode is reset at 0 (step S804), and consequently the SR_CW value is also reset at SR_CWmin. The processing in step S805 corresponds to the processing performed in step S504 in the flowchart illustrated in Fig. 5.

Then, when transmission data is caused, STA starts backoff in the backoff time or the SR backoff time set in step S805 after arbitarian inter frame space (AIFS) elapses (step S806).

Step S806 corresponds to the processing performed in step S505 in the flowchart illustrated in Fig. 5. When not observing an adjacent cell signal, STA starts backoff in the backoff time found for the conventional backoff. Then, when the backoff ends, normal packet transmission is performed. Further, in a case where the reception power of STA is the OBSS-PD threshold or less while STA is observing an adjacent cell signal, STA sets a SR mode depending on interference power and a distance to AP, and starts backoff in the SR backoff time found for the corresponding SR mode. Then, when the backoff ends, SR transmission is performed.

The processing procedure illustrated in Fig. 8 is performed in order for the communication apparatus operating as STA to start backoff for acquiring a next transmission opportunity, and is characterized in that, for example, the number of transmission failures is separately counted during normal packet transmission and during SR transmission and the number of transmission failures is counted per SR mode.

STA manages the number of transmission failures per SR mode so that the SR_CW value is set depending on the number of transmission failures per SR mode. That is, STA can control a transmission standby time during SR transmission by a packet transmission success rate per SR mode.

For example, when STA receives strong interference power, and largely lowers transmission power thereby to perform SR transmission (or selects a SR mode in which a backoff time is set to be longer), STA sets a longer standby time during SR transmission so that a transmission opportunity in SR transmission is difficult to acquire when packet transmission fails in SR transmission, but STA can secure a transmission opportunity when receiving weak interference power and performing SR transmission without lowering transmission power so much (or when selecting a SR mode in which a backoff time is set to be shorter). Further, the number of transmission failures does not change in the normal state (or while an adjacent cell signal is not present), and thus a transmission opportunity is easy to positively acquire during normal packet transmission.

Further, since even in a case where the packet transmission success rate lowers in a SR mode with strong interference power and the standby time during SR transmission is set to be longer so that a transmission opportunity in SR transmission is difficult to acquire, the number of transmission failures in the normal state (or while an adjacent cell signal is not present) does not change, STA separately counts the number of transmission failures during normal packet transmission and during SR transmission thereby to positively secure a transmission opportunity during normal packet transmission. Assuming that a transmission opportunity is secured in normal packet transmission, it is enough that the number of transmission failures is counted twice during normal packet transmission and during SR transmission, and the numbers of transmission failures in all the SR modes may be collectively counted.

In other words, according to the first embodiment, STA which performs SR transmission by use of information available from an adjacent cell signal adjusts a SR backoff time by an intensity of its received interference power and information regarding a distance (propagation loss) to AP and the like, thereby acquiring a transmission opportunity while avoiding packet collision inside and outside the cell. Second embodiment, not encompassed by the wording of the claims, but considered as useful for understanding the invention

The second embodiment as an application of the first embodiment described above is a method for providing an additional backoff time and giving a penalty to a terminal which successfully performs packet transmission in SR transmission.

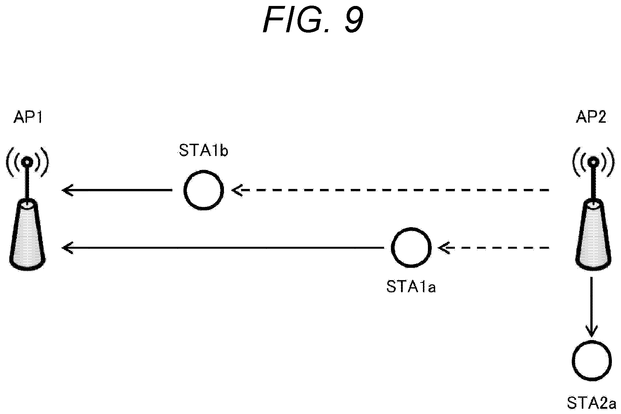

Fig. 9 illustrates an exemplary configuration of the wireless LAN system according to the technology of the second embodiment. The illustrated system is configured of a plurality of base stations (AP) and a plurality of terminals (STA) among which connection is established, and interference sources such as adjacent cells and other systems are present therearound.

AP1 configures a self-cell (BSS) together with its own STAla and STA1b. Similarly, AP2 configures a self-cell together with its own STA2a. For an arrangement of the cells and the terminals, the cell of AP2 is an adjacent cell to the cell of AP1, and their receivable ranges overlap.

In the Figure, the arrows indicate packet transmission directions. The orientations of the solid-line arrows indicate transmission destinations designated by packets. Further, the orientations of the dotted-line arrows indicate not packet transmission destinations but arrivals of packets. For example, uplink (UL) signals from STAla and STAlb in AP1 arrive at AP1. Further, when a downlink (DL) signal is transmitted from AP2 to its own STA2a, it arrives as an adjacent cell signal also at STAla and STA1b. The illustrated example assumes that STAla is closer to AP2 than STA1b.

Even when observing an adjacent cell signal from AP2, STAla and STAlb can transmit a UL signal to AP1 in SR transmission on the basis of the information regarding the adjacent cell signal (for example, the reception power of the adjacent cell signal with the OBSS-PD threshold or less, or the SR parameters described in the packets of the adjacent cell signal).

However, a configuration of the wireless LAN system according to the technology of the second embodiment is not limited to Fig. 9, and may be such that a plurality of communication apparatuses among which connection is established are present and communication apparatuses are present as surrounding terminals for the respective communication apparatuses, and a positional relationship between AP and STA does not matter if the conditions are met. Additionally, both AP and STA are assumed to have a similar configuration to the communication apparatus 200 illustrated in Fig. 2.

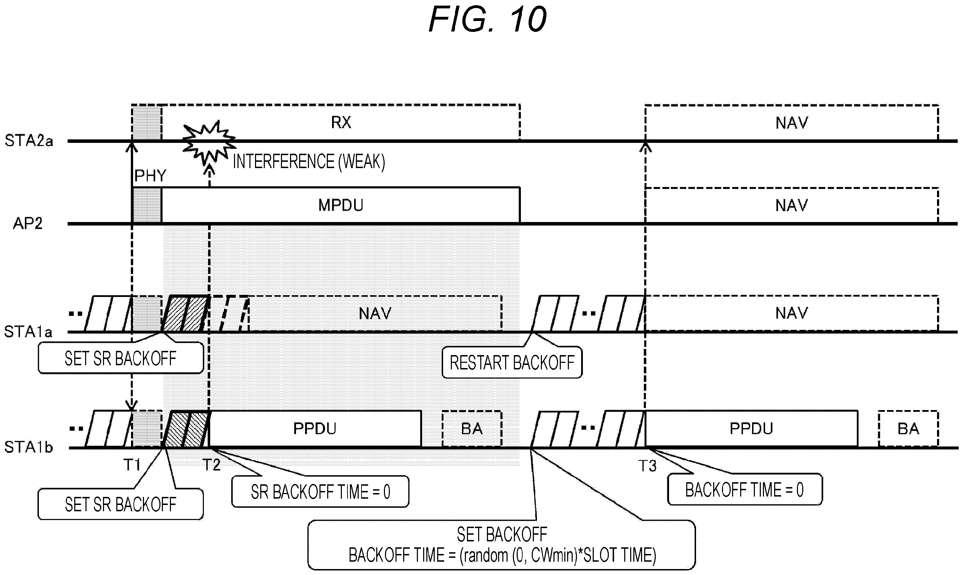

Fig. 10 illustrates an exemplary communication sequence in the wireless LAN system illustrated in Fig. 9. However, each horizontal axis in the Figure indicates a time axis, each square indicates a packet transmitted at a time corresponding to a position on a horizontal axis, and each parallelogram indicates a transmission standby time (backoff). Further, the orientation of the solid-line arrow vertically extending from a packet indicates a packet transmission destination. Further, the orientations of the dotted-line arrows vertically extending from packets indicate not packet transmission destinations but arrivals of the packets.

The exemplary communication sequence illustrated in Fig. 10 basically applies the technology according to the first embodiment, and assumes that each STA newly sets the SR backoff in the packet transmission standby while observing an adjacent cell signal, and adjusts a backoff time during SR transmission on the basis of an intensity of its observed interference power and information regarding a distance (propagation loss) to AP and the like. In Fig. 10, the parallelograms corresponding to the SR backoff are shaded. However, the exemplary communication sequence assumes that the technology according to the second embodiment is not applied.

In the Figure, it is assumed that both STAla and STAlb set the conventional backoff and are in the transmission standby state. Then at time T1, STAla and STAlb in the transmission standby receive a signal sent from AP2, and when identifying the signal as an adjacent cell signal on the basis of the information in the signal (such as BSS Color described in PHY header), further confirm that the reception power is at the OBSS-PD threshold or less, stop the reception, and each start backoff for SR transmission.

In a case where both STAla and STAlb can perform SR transmission, they stop the conventional backoff, each newly set the SR backoff, and wait for packet transmission. STAla and STAlb each adjust a SR backoff time depending on an intensity of their observed interference power and information regarding a distance (propagation loss) to AP as packet transmission destination and the like. In the exemplary system configuration assumed in Fig. 9 and Fig. 10, STAla is positioned closer to AP2 than STA1b, and thus the interference power from AP2 onto STAlb is weaker than the interference power from AP2 onto STA1a. Thus, while STAlb sets a shorter SR backoff time, STAla sets a longer SR backoff time, and STAlb more easily acquires a transmission opportunity than STA1a.

Consequently, at time T2, STAlb which has earlier terminated the SR backoff acquires a transmission opportunity, and starts SR transmission to AP1. Further, STAla sets NAV to be in the transmission prohibited state until a BA packet is returned from AP1 to STA1b. STAlb performs packet transmission in SR transmission, thereby alleviating a deterioration in reception quality of STA2a in the adjacent cell. Further, also in a case where the access procedure of adjusting transmission power depending on interference power is performed, STAlb can perform SR transmission without largely lowering transmission power, and thus AP1 can keep preferable reception quality.

Thereafter, STAlb terminates packet transmission to AP1 and receives the BA packet from AP1, and in a case where a transmission packet is still present, STAlb sets (resets) the conventional backoff again. At this time, STAlb resets the CW value at CWmin in response to success of the packet transmission. Therefore, STAlb sets a backoff time obtained by multiplying a random value between 0 and CWmin by the slot time. Further, when NAV ends, STAla restarts the conventional backoff which has been stopped in reception of an adjacent cell signal from AP2.

It can be assumed here that the conventional backoff time set by STAlb is shorter than the remaining backoff time of STAla which has restarted the conventional backoff and STAlb acquires a right of transmission again. That is, as illustrated, at time T3, STAlb which has earlier terminated the conventional backoff starts normal packet transmission to AP1. Further, STAla sets NAV to be in the transmission prohibited state until a BA packet is returned from AP1 to STA1b.

Additionally, in a case where the reception power of the adjacent cell signal from STAlb at this time exceeds the OBSS-PD threshold or is not for SR transmission, AP2 and STA2a similarly set NAV to be in the transmission prohibited state until a BA packet is returned from AP1 to STA1b.

When STA which has successfully performed SR transmission continuously acquires a right of transmission also during normal packet transmission in many cases, there is caused an unfair communication state in which specific STA occupies the transmission opportunities both during SR transmission and during normal packet transmission and other STA lose their transmission opportunity, and thus throughput of the entire system lowers.

Thus, according to the second embodiment, a terminal which has successfully performed packet transmission in SR transmission is provided with an additional backoff time and is given a penalty, thereby achieving fair transmission opportunities among STAs.

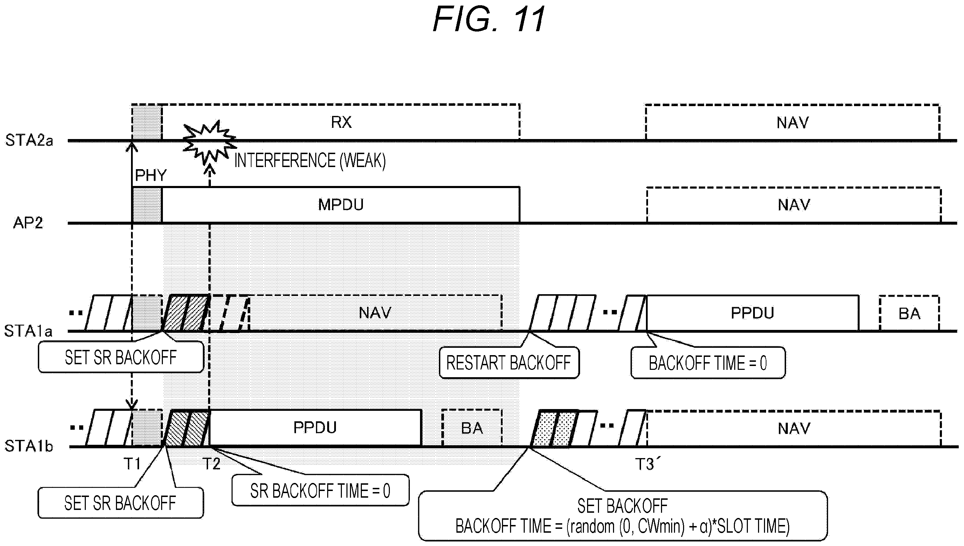

Fig. 11 illustrates other exemplary communication sequence in the wireless LAN system illustrated in Fig. 9. However, each horizontal axis in the Figure indicates a time axis, each square indicates a packet transmitted at a time corresponding to a position on a horizontal axis, and each parallelogram indicates a transmission standby time (backoff). Further, the orientation of the solid-line arrow vertically extending from a packet indicates a packet transmission destination. Further, the orientations of the dotted-line arrows vertically extending from packets indicate not packet transmission destinations but arrivals of the packets.

The exemplary communication sequence illustrated in Fig. 11 applies the technology according to the first embodiment, and assumes that each STA newly sets the SR backoff when waiting for packet transmission while observing an adjacent cell signal, and adjusts a backoff time during SR transmission on the basis of an intensity of its observed interference power and information regarding a distance (propagation loss) to AP and the like. In Fig. 11, the parallelograms corresponding to the SR backoff are shaded. Further, in the exemplary communication sequence, the technology according to the second embodiment is also applied, and a terminal which has successfully performed packet transmission in SR transmission is provided with an additional backoff time and is given a penalty.

In the Figure, it is assumed that both STAla and STAlb set the conventional backoff and are in the transmission standby state. Then at time T1, STAla and STAlb in the transmission standby receive a signal sent from AP2, and when identifying the signal as an adjacent cell signal on the basis of the information in the signal (such as BSS Color described in PHY header), further confirm that the reception power is at the OBSS-PD threshold or less, stop the reception, and each start backoff for SR transmission.

In a case where both STAla and STAlb can perform SR transmission, they stop the conventional backoff, each newly set the SR backoff, and wait for packet transmission. STAla and STAlb each adjust a SR backoff time depending on an intensity of their observed interference power and information regarding a distance (propagation loss) to AP and the like. In the exemplary system configuration assumed in Fig. 9 and Fig. 11, STAla is positioned closer to AP2 than STA1b, and thus the interference power from AP2 onto STAlb is weaker than the interference power from AP2 onto STA1a. Thus, while STAlb sets a shorter SR backoff time, STAla sets a longer SR backoff time, and STAlb more easily acquires a transmission opportunity than STA1a.

Consequently, at time T2, STAlb which has earlier terminated the SR backoff acquires a transmission opportunity, and starts SR transmission to AP1. Further, STAla sets NAV to be in the transmission prohibited state until a BA packet is returned from AP1 to STA1b. STAlb performs packet transmission in SR transmission, thereby alleviating a deterioration in reception quality of STA2a in the adjacent cell. Further, also in a case where the access procedure of adjusting transmission power depending on interference power is performed, STAlb can perform SR transmission without largely lowering transmission power, and thus AP1 can keep preferable reception quality.

When NAV ends, STAla restarts the conventional backoff which has been stopped in reception of an adjacent cell signal from AP2. On the other hand, STAlb terminates packet transmission to AP1 and receives the BA packet from AP1, and in a case where a transmission packet is still present, STAlb sets (resets) the conventional backoff again. At this time, STAlb resets the CW value at CWmin due to success of the packet transmission, but is provided with an additional backoff time and is given a penalty. In Fig. 11, the parallelograms corresponding to additional backoff are dotted.

Specifically, STAlb sets an additional backoff time obtained by multiplying a value obtained by adding a predetermined value α to a random value determined between 0 and CWmin by the slot time. Here, α is a positive integer, and a time obtained by multiplying α by the slot time corresponds to an additional backoff time. α may be a fixed value, or may be a variable value which changes depending on the number of times STA successfully performs SR transmission, other communication situation, or the like. It may be assumed that α is set at 0 when STA fails in SR transmission. Alternatively, α may be a negative integer. α of a positive value is a handicap when STA which sets additional backoff acquires a transmission opportunity, but is advantageous for other STA, while α of a negative value is advantageous for STA which sets additional backoff.

STAlb which has successfully performed packet transmission in SR transmission sets a longer backoff time than the remaining backoff time of STAla which has restarted the conventional backoff by the additional backoff so that a transmission opportunity during normal packet transmission can be conceded to STAla which has not been able to perform SR transmission. That is, as illustrated, at time T3', STAla which has earlier terminated the conventional backoff starts normal packet transmission to AP1. Further, STAlb sets NAV to be in the transmission prohibited state until a BA packet is returned from AP1 to STA1a. Additionally, in a case where the reception power of the adjacent cell signal from STAla at this time exceeds the OBSS-PD threshold or is not for SR transmission, AP2 and STA2a similarly set NAV to be in the transmission prohibited state until a BA packet is returned from AP1 to STA1a.

In this way, STA which has successfully performed packet transmission in SR transmission is given a penalty called additional backoff, and thus can concede a transmission opportunity to other STA when performing normal packet transmission without an interference by an adjacent cell signal. Therefore, it is possible to prevent specific STA from occupying the transmission opportunities in the cell applying SR transmission therein, thereby achieving fair transmission opportunities among STAs.

Additionally, STA which has successfully performed SR transmission does not necessarily need to be provided with an additional backoff time. Whether or not to give additional backoff to STA which has successfully performed packet transmission in SR transmission may be determined or a specific numerical value of an additional backoff time may be determined depending on a communication environment such as a situation in which a self-cell is interfered by an adjacent cell.

For example, a backoff time may be provided depending on whether or not STA has successfully performed previous SR transmission, or several times of past success of SR transmission (or the number of failures) may be stored and an additional backoff time may be accordingly adjusted.

Further, in a situation where STA which has successfully performed packet transmission in SR transmission is disadvantageous due to additional backoff, additional backoff may not be given. Further, additional backoff may be set per SR mode.

Further, STA may set an additional backoff time or determine whether or not to set an additional backoff time on the basis of information available from an adjacent cell signal (such as reception power of the adjacent cell signal or SR parameters described in packets) or other surrounding environment. Specifically, STA may set its own additional backoff time on the basis of the backoff time set during the packet transmission, the information regarding the parameters used for determining the backoff time, or the like described in the packets of the adjacent cell signal.

In some cases, even in a case where STA has successfully performed previous SR transmission and the packet transmission success rate in several times of SR transmission in the past is high, STA may not set an additional backoff time or may set a short additional backoff time.

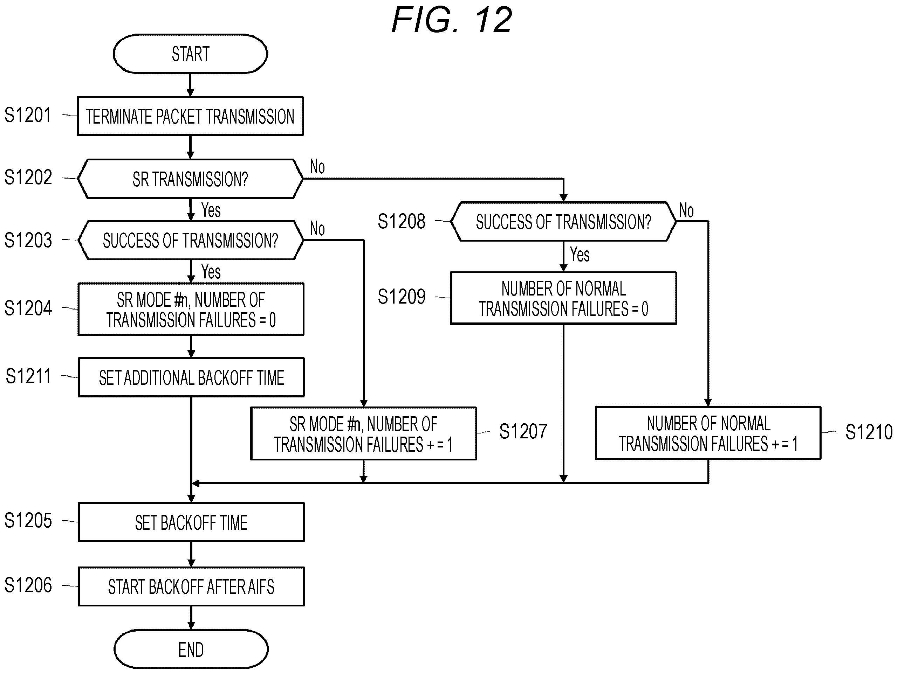

Fig. 12 illustrates a flowchart of a processing procedure performed by the communication apparatus after the end of packet transmission according to the second embodiment. For example, when the communication apparatus 200 having the functional configuration illustrated in Fig. 2 operates as STA in the wireless LAN system illustrated in Fig. 9, the control part 203 mainly performs the processing procedure.

When terminating packet transmission (step S1201), STA checks whether or not it has performed SR transmission (step S1202) .

In a case where STA has performed not SR transmission but normal packet transmission (No in step S1202), STA checks whether or not it has successfully performed the packet transmission (step S1208). Whether or not the packet transmission has been successfully performed can be determined depending on whether or not a block ack (BA) packet is returned from AP as transmission destination to STA.

In a case where the normal packet transmission has been successfully performed (Yes in step S1208), STA resets the number of transmission failures during the normal packet transmission at 0 (step S1209). Further, in a case where the normal packet transmission has failed (No in step S1208), STA increments the number of transmission failures during the normal packet transmission by 1 (step S1210) .

On the other hand, when STA has performed the SR transmission (Yes in step S1202), the number of transmission failures is managed per SR mode. Specifically, STA further checks whether or not it has successfully performed the SR transmission (step S1203). Whether or not the SR transmission has been successfully performed can be determined depending on whether or not a block ack (BA) packet is returned from AP as transmission destination to STA.

In a case where the SR transmission has failed (No in step S1203), STA increments the number of transmission failures in the SR mode at that time by 1 (step S1207).

On the other hand, in a case where the SR transmission has been successfully performed (Yes in step S1203), STA resets the number of transmission failures in the SR mode at that time at 0 (step S1204), and sets an additional backoff time (step S1211). Specifically, a predetermined value α (described above) to be added to a random value determined between 0 and CWmin is set thereby to set an additional backoff time.

Further, step S1211 may include a processing of determining whether or not to give additional backoff to STA which has successfully performed packet transmission in SR transmission. For example, in a communication environment in which STA which has successfully performed packet transmission in SR transmission is disadvantageous due to additional backoff, additional backoff may not be given. If the value α = 0 is set, additional backoff is not given.

STA then sets a backoff time (step S1205). In the case of the conventional backoff, the CW value is determined depending on the number of transmission failures, and then a random value between 0 and the CW value is multiplied by the slot time (during normal transmission) thereby to find a backoff time. The CW value increases up to CWmax depending on the number of transmission failures assuming an initial value of CWmin. Further, when normal packet transmission is successfully performed (Yes in step S1208), the number of transmission failures is reset to 0 (step S1209), and consequently the CW value is also reset to CWmin.

Further, in the case of the SR backoff, in step S1205, the SR_CW value is determined depending on the number of transmission failures per SR mode, and then a random value between 0 and the SR_CW value is multiplied by the slot time (during SR transmission) thereby to find a SR backoff time. The SR_CW value increases up to SR_CWmax depending on the number of transmission failures assuming an initial value of SR_CWmin. Further, when packet transmission is successfully performed in SR transmission (Yes in step S1203), the number of transmission failures counted per SR mode is reset to 0 (step S1204), and consequently the SR_CW value is also reset to SR_CWmin. The processing in step S1205 corresponds to the processing performed in step S504 in the flowchart illustrated in Fig. 5.

Then, when transmission data is caused, STA starts backoff in the backoff time set in step S1205 after AIFS elapses (step S1206) .

Step S1206 corresponds to the processing performed in step S505 in the flowchart illustrated in Fig. 5. When not observing an adjacent cell signal, STA starts backoff in the backoff time found for the conventional backoff. Then, when the backoff ends, normal packet transmission is performed. Further, in a case where an adjacent cell signal is observed but its reception power is at the OBSS-PD threshold or less, STA sets a SR mode depending on interference power and a distance to AP, and starts backoff in the SR backoff time found in the corresponding SR mode. Then, when the backoff ends, SR transmission is performed.

The processing procedure illustrated in Fig. 12 is characterized in that, for example, additional backoff is provided only when SR transmission is successfully performed, additional backoff is not provided when normal packet transmission is successfully performed, and additional backoff is set per SR mode.

STA which has successfully performed SR transmission is provided with additional backoff, and thus STA which cannot perform SR transmission (or performs only normal packet transmission) can eliminate the disadvantages thereby to achieve fair communication opportunities with other STA for performing SR transmission.

Further, STA provides additional backoff per SR mode, and thus additional backoff is set when packet transmission is successfully performed in a SR mode with weak interference power and high packet transmission success rate, thereby achieving fair transmission opportunities with other STA. To the contrary, in a SR mode with strong interference power and low packet transmission success rate, additional backoff is not provided due to success of packet transmission in other SR mode and no disadvantage is caused.

In other words, according to the second embodiment, a terminal performs the SR backoff and then starts SR transmission while observing an adjacent cell signal, and when successfully performing SR transmission, sets an additional backoff time as a penalty when setting or restarting backoff immediately after the success, thereby achieving fair transmission opportunities among terminals.

### Third embodiment

The third embodiment is a method in which AP sets a parameter used for adjusting a SR backoff time for each STA on the basis of the number of its own STAs, a throughput situation of each terminal, and the like.

The parameters used for adjusting a SR backoff time are a minimum value SR_CWmin and a maximum value SR_CWmax of the contention window during the SR backoff, as well as a slot time (Slot Time) set per SR mode, for example. Further, a flag (Extra backoff flag) for designating whether or not to provide additional backoff during packet transmission in SR transmission, or information (Extra backoff time) regarding a value of an additional backoff time can be included in the parameters. Other information may be further included therein.

Further, AP may set the parameters used for adjusting a SR backoff time per access category (AC) level.

For example, the IEEE802. 11e standard employs a mechanism for defining enhanced distributed channel access (EDCA) in order to provide a quality of service (QoS) function, classifying packets into four ACs and storing them in each queue, and transmitting the packets depending on the priority of each AC. The four ACs herein are AC_VO (Voice), AC_VI (Video), AC_BE (Best Effort), and AC_BK (Background).

AP can extend the action frame in the IEEE802.11 standard, for example, and can notify each STA in AP of the parameters used for adjusting a SR backoff time.

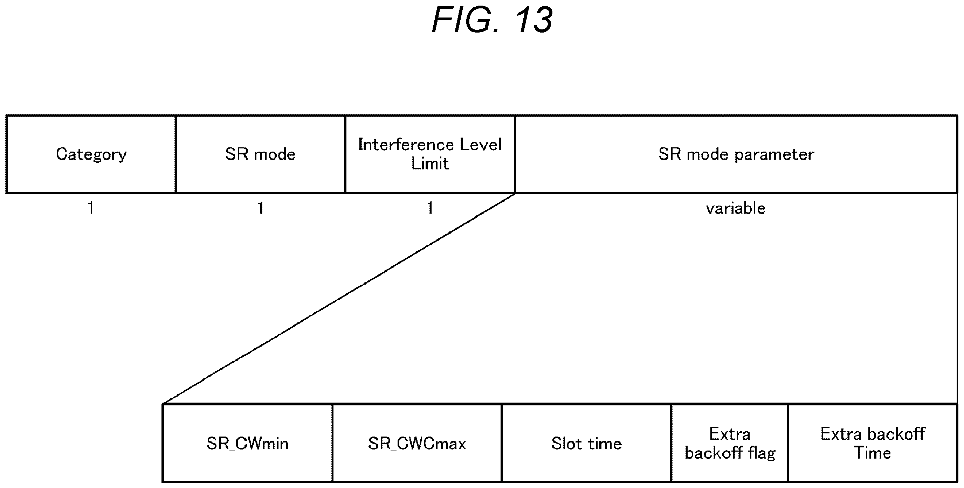

Fig. 13 illustrates an exemplary configuration of frames used by AP for notifying each STA in AP of the parameters used for adjusting a SR backoff time.

In the Figure, Category is a 1-octet (8-bit) field for designating an AC level. Further, SR mode is a 1-octet field for designating a SR mode to be provided in notification. Further, Interference Level Limit is a 1-octet field for designating a limited value of a permitted interference level.

SR mode parameter is a variable-length field for describing various parameters used for adjusting a SR backoff time. In the illustrated example, there are provided the fields for describing each of a minimum value SR_CWmin and a maximum value SR_CWmax of the contention window during the SR backoff, a slot time (Slot Time), a flag (Extra backoff flag) for designating whether or not to provide additional backoff during packet transmission in SR transmission, and information (Extra backoff Time) regarding an additional backoff time, which are set per SR mode. Of course, fields for describing information other than the information may be provided in the SR mode parameter field.

Additionally, a frame configuration in which AP notifies each STA in AP of the parameters used for adjusting a SR backoff time is not limited to Fig. 13. As long as similar information is transmitted, an action frame configuration other than the illustrated one may be employed. Further, not an action frame but a beacon frame for reporting network information or other management frame is extended thereby to provide notification of the parameters used for adjusting a SR backoff time.

AP sets each parameter used for adjusting a SR backoff time depending on a communication environment or the like of its cell, notifies its own STA of the parameter by use of the action frame (or beacon frame or management frame), and sets a SR backoff time.

AP flexibly sets each parameter used for adjusting a SR backoff time such that throughput in its own cell (or the entire system including adjacent cells) is basically maximum. For example, in a case where AP determines that the number of its own STAs increases, AP increases the value of SR_CWmin in order to prevent packet collision in SR transmission. Further, in a case where it is determined that a large number of packet transmissions from specific STA are made, the additional backoff flag is set at 1 and the right of transmission of STA which has successfully performed packet transmission in SR transmission is prevented from being acquired, thereby achieving fair transmission opportunities among respective STAs in the self-cell.

On the other hand, STA basically sets a SR backoff time when SR-transmitting packets according to each parameter used for adjusting a SR backoff time provided in notification from AP. However, STA receives the notification frame from AP, but is to operate a network for setting a SR backoff time at its judgment.

In other words, according to the third embodiment, a base station sets the parameters used for adjusting a SR backoff time for each terminal on the basis of the number of its own terminals, throughput of each terminal, or the like, thereby achieving an improvement in throughput in the entire system and fair transmission opportunities among terminals, and promoting SR transmission.

### INDUSTRIAL APPLICABILITY

Each embodiment has been described above, and it should be understood that the following effects can be expected according to the technology disclosed in the present specification.

STA adjusts a transmission standby time during SR transmission depending on interference power to be observed, thereby controlling transmission without a large influence on the entire communication quality of adjacent cells and self-cells and without extra transmission restrictions.

Further, STA which has successfully performed SR transmission is given a penalty of providing additional backoff, for example, and thus other STA which has not been able to acquire a transmission opportunity in SR transmission can preferentially acquire a transmission opportunity when an interference signal is not observed. Therefore, each STA can equally acquire a transmission opportunity, thereby improving throughput in the entire system.

The technology disclosed in the present specification can be preferably applied to wireless LAN systems in the IEEE802.11ax standard, for example. The technology disclosed in the present specification can be applied to various network systems using the SR technology for performing packet transmission also when a terminal acquires an adjacent cell signal by use of information available from the adjacent cell signal.

In other words, the technology disclosed in the present specification has been described by way of example.

### REFERENCE SIGNS LIST

- 200:: Communication apparatus
- 201:: Communication part
- 202:: Control part
- 203:: Storage part

## Claims

1. A communication apparatus configured to operate as an access point, wherein the communication apparatus (200) is configured to perform spatial reuse, SR, transmission, comprising:
a control part (202) configured to control a first backoff time while an interference signal of a communication destination capable of packet transmission is being observed on the basis of information regarding an interference signal; and
a notification part configured to notify the communication destination of information for determining a second backoff time;
wherein the notification part is configured to notify a terminal of the communication apparatus capable of packet transmission based on information regarding an interference signal of the information for determining the second backoff time; and
wherein the notification part is configured to provide notification of the information for determining the second backoff time in association with a SR mode defined on the basis of at least one of interference power or information regarding a communication distance.

2. The communication apparatus according to claim 1,
wherein the information for determining the second backoff time includes a parameter for determining the second backoff time while an interference signal is being observed.

3. The communication apparatus according to claim 1,
wherein the information for determining the second backoff time includes information for designating the presence of an additional backoff time relative to a backoff time when transmitting a packet while an interference signal is not observed.

4. The communication apparatus according to claim 2,
wherein the notification part provides notification of the information for determining the second backoff time set by the control part on the basis of information regarding at least one of the number of terminals of the communication apparatus or throughput of the terminals.

5. The communication apparatus of claim 1 comprising:
a control part configured to control the first backoff time while the interference signal is being observed on the basis of at least one of interference power or information regarding a communication distance to a transmission destination of the packet.

6. A communication method comprising:
a control step of controlling a first backoff time while an interference signal of a communication destination capable of packet transmission based on information regarding an interference signal is being observed; and
a notification step of notifying the communication destination of information for determining a second backoff time;
wherein the notification step comprises notifying a terminal of the communication apparatus capable of packet transmission based on information regarding an interference signal of the information for determining the second backoff time; and
wherein the notification step further comprises providing notification of the information for determining the second backoff time in association with a SR mode defined on the basis of at least one of interference power or information regarding a communication distance.

## Patentansprüche

1. Kommunikationsvorrichtung, die dafür ausgelegt ist, als Zugangspunkt betrieben zu werden, wobei die Kommunikationsvorrichtung (200) dafür ausgelegt ist, "Spatial Reuse"-, SR-, Übertragung durchzuführen, umfassend:
einen Steuerteil (202), der dafür ausgelegt ist, eine erste Backoff-Zeit zu steuern, während ein Störungssignal eines Kommunikationsziels, das zur Paketübertragung fähig ist, auf der Grundlage von Informationen bezüglich eines Störungssignals beobachtet wird; und
einen Benachrichtigungsteil, der dafür ausgelegt ist, das Kommunikationsziel über Informationen zum Bestimmen einer zweiten Backoff-Zeit zu benachrichtigen;
wobei der Benachrichtigungsteil dafür ausgelegt ist, ein Endgerät der Kommunikationsvorrichtung, das zur Paketübertragung fähig ist, auf der Grundlage von Informationen bezüglich eines Störungssignals der Informationen zum Bestimmen der zweiten Backoff-Zeit zu benachrichtigen; und
wobei der Benachrichtigungsteil dafür ausgelegt ist, eine Benachrichtigung über die Informationen zum Bestimmen der zweiten Backoff-Zeit im Zusammenhang mit einem SR-Modus bereitzustellen, der auf der Grundlage von mindestens einem von Störungsleistung oder Informationen bezüglich einer Kommunikationsentfernung definiert ist.

2. Kommunikationsvorrichtung nach Anspruch 1,
wobei die Informationen zum Bestimmen der zweiten Backoff-Zeit einen Parameter zum Bestimmen der zweiten Backoff-Zeit beinhalten, während ein Störungssignal beobachtet wird.

3. Kommunikationsvorrichtung nach Anspruch 1,
wobei die Informationen zum Bestimmen der zweiten Backoff-Zeit Informationen zum Bezeichnen des Vorhandenseins einer zusätzlichen Backoff-Zeit relativ zu einer Backoff-Zeit beim Übertragen eines Pakets, während ein Störungssignal nicht beobachtet wird, beinhalten.

4. Kommunikationsvorrichtung nach Anspruch 2,
wobei der Benachrichtigungsteil eine Benachrichtigung über die Informationen zum Bestimmen der zweiten Backoff-Zeit, die durch den Steuerteil eingestellt wurde, auf der Grundlage von Informationen bezüglich mindestens einem von der Anzahl von Endgeräten der Kommunikationsvorrichtung oder dem Durchsatz der Endgeräte bereitstellt.

5. Kommunikationsvorrichtung nach Anspruch 1, umfassend:
einen Steuerteil, der dafür ausgelegt ist, die erste Backoff-Zeit zu steuern, während das Störungssignal beobachtet wird, und zwar auf der Grundlage von mindestens einem von Störungsleistung oder Informationen über eine Kommunikationsentfernung zu einem Übertragungsziel des Pakets.

6. Kommunikationsverfahren, umfassend:
einen Steuerschritt des Steuerns einer ersten Backoff-Zeit, während ein Störungssignal eines Kommunikationsziels, das zur Paketübertragung fähig ist, auf der Grundlage von Informationen bezüglich eines Störungssignals beobachtet wird; und
einen Benachrichtigungsschritt des Benachrichtigens des Kommunikationsziels über Informationen zum Bestimmen einer zweiten Backoff-Zeit;
wobei der Benachrichtigungsschritt das Benachrichtigen eines Endgeräts der Kommunikationsvorrichtung, das zur Paketübertragung fähig ist, auf der Grundlage von Informationen bezüglich eines Störungssignals der Informationen zum Bestimmen der zweiten Backoff-Zeit umfasst; und
wobei der Benachrichtigungsschritt ferner das Bereitstellen einer Benachrichtigung über die Informationen zum Bestimmen der zweiten Backoff-Zeit im Zusammenhang mit einem SR-Modus umfasst, der auf der Grundlage von mindestens einem von Störungsleistung oder Informationen bezüglich einer Kommunikationsentfernung definiert ist.

## Revendications

1. Appareil de communication configuré pour fonctionner comme un point d'accès, dans lequel l'appareil de communication (200) est configuré pour effectuer une transmission de réutilisation spatiale, SR, comprenant :
une partie de commande (202) configurée pour commander un premier temps d'attente pendant qu'un signal de brouillage d'une destination de communication capable d'une transmission de paquets est observé sur la base d'informations concernant un signal de brouillage ; et
une partie de notification configurée pour notifier à la destination de communication des informations permettant de déterminer un second temps d'attente ;
dans lequel la partie de notification est configurée pour notifier à un terminal de l'appareil de communication capable d'une transmission de paquets sur la base d'informations concernant un signal de brouillage les informations pour déterminer le second temps d'attente ; et
dans lequel la partie notification est configurée pour fournir une notification des informations pour déterminer le second temps d'attente en association avec un mode SR défini sur la base d'au moins l'un parmi la puissance de brouillage ou des informations concernant une distance de communication.

2. Appareil de communication selon la revendication 1,
dans lequel les informations pour déterminer le second temps d'attente comportent un paramètre pour déterminer le second temps d'attente pendant qu'un signal de brouillage est observé.

3. Appareil de communication selon la revendication 1,
dans lequel les informations pour déterminer le second temps d'attente comportent des informations pour désigner la présence d'un temps d'attente supplémentaire par rapport à un temps d'attente lors de la transmission d'un paquet tandis qu'un signal de brouillage n'est pas observé.

4. Appareil de communication selon la revendication 2,
dans lequel la partie de notification fournit une notification des informations pour déterminer le second temps d'attente défini par la partie de commande sur la base d'informations concernant au moins l'un parmi le nombre de terminaux de l'appareil de communication ou le débit des terminaux.

5. Appareil de communication selon la revendication 1, comprenant :
une partie de commande configurée pour commander le premier temps d'attente pendant que le signal de brouillage est observé sur la base d'au moins l'un parmi la puissance de brouillage ou des informations concernant une distance de communication vers une destination de transmission du paquet.

6. Procédé de communication comprenant :
une étape de commande consistant à commander un premier temps d'attente pendant qu'un signal de brouillage d'une destination de communication capable d'une transmission de paquets sur la base d'informations concernant un signal de brouillage est observé ; et
une étape de notification consistant à notifier à la destination de communication des informations pour déterminer un second temps d'attente ;
dans lequel l'étape de notification comprend la notification à un terminal de l'appareil de communication capable d'une transmission de paquets sur la base d'informations concernant un signal de brouillage des informations pour déterminer le second temps d'attente ; et
dans lequel l'étape de notification comprend en outre la fourniture d'une notification des informations pour déterminer le second temps d'attente en association avec un mode SR défini sur la base d'au moins l'un parmi la puissance de brouillage ou des informations concernant une distance de communication.
